# FASCICULE DE BREVET EUROPEEN

(11) **EP 2 385 874 B1**
(45) Date de publication et mention de la délivrance du brevet: **20.02.2013**
(21) Numéro de dépôt: 09793562.1
(22) Date de dépôt: 03.12.2009
(51) Int. Cl.: B01D 53/52, B01D 53/68, B01D 53/75, B01D 53/86, C10K 1/32, C10K 1/34

(54) **PROCEDE D'ELIMINATION D'IMPURETES SOUFREES, AZOTEES ET HALOGENEES CONTENUES DANS UN GAZ DE SYNTHESE**
VERFAHREN ZUM ENTFERNEN VON SCHWEFEL-, STICKSTOFF- UND HALOGENVERUNREINIGUNGEN AUS EINEM SYNTHESEGAS
METHOD FOR REMOVING SULPHUR, NITROGEN AND HALOGEN IMPURITIES FROM A SYNTHETIC GAS

(30) Priorité: 12.01.2009 FR 0900108
(43) Date de publication de la demande: 16.11.2011
(73) Titulaire: IFP Energies nouvelles, 92852 Rueil-Malmaison Cedex (FR)
(72) Inventeur: CHICHE, David, 69007 Lyon (FR); BOUDET, Nicolas, F-69630 Chaponost (FR); VIGUIE, Jean-Christophe, F-69006 Lyon (FR); LELIAS, Marc-Antoine, 30100 Ales (FR); DUCREUX, Olivier, F-78430 Louvenciennes (FR)
(86) Numéro de dépôt international: PCT/FR2009/001375
(87) Numéro de publication internationale: WO 2010/079265

(56) Documents cités:
- WO-A1-2006/008317
- FR-A1- 2 830 466
- US-A- 4 511 668
- US-A- 5 660 807
- US-A- 6 107 353
- US-A1- 2006 272 502

## Description

La présente invention concerne le domaine de la purification des gaz de synthèse en général. Elle concerne plus particulièrement un procédé permettant d'éliminer les impuretés soufrées et azotées, telles que par exemple : H₂S, COS, CS₂, HCN et NH₃. De surcroît, les impuretés halogénées telles HF, HCl, HBr et HI sont également éliminées.

L'invention a pour objet un procédé d'élimination des impuretés soufrées, azotées et halogénées contenues dans un gaz de synthèse, ledit procédé comprenant :
a) une étape conjointe d'hydrolyse du COS et du HCN contenus dans le gaz et de captation des composés halogénés, utilisant un catalyseur à base de TiO₂,
b) une étape de lavage par solvant,
c) une étape de désulfuration sur une masse de captation ou adsorbant.

De manière avantageuse, le procédé de l'invention est mis en oeuvre en amont d'une unité Fischer-Tropsch, de façon à éliminer les impuretés qui sont néfastes au bon fonctionnement de ladite unité. Il peut également être utilisé afin de purifier le gaz de synthèse mis en oeuvre par exemple, dans les installations de cogénération, dans les procédés de synthèse chimique tel que les procédés de synthèse du méthanol.

### Art antérieur

Le gaz de synthèse est généralement un mélange gazeux comprenant du monoxyde de carbone, de l'hydrogène, de la vapeur d'eau et du dioxyde de carbone. Il contient, en outre, des impuretés soufrées, azotées et halogénées qu'il s'agit d'éliminer afin que le gaz n'en contienne plus qu'à des teneurs résiduelles.

Les impuretés présentes dans le gaz de synthèse non purifié peuvent entraîner une corrosion accélérée des installations dans lesquelles ils sont mis en oeuvre, telles que par exemple les turbines à gaz dans les unités de cogénération (IGCC ou "Integrated Gasification Combined Cycle" selon la terminologie anglo-saxonne), et sont susceptibles d'empoisonner les catalyseurs utilisés pour les procédés de synthèse chimique tels que ceux utilisés dans la synthèse Fischer-Tropsch ou du méthanol, ou encore d'atténuer les performances des matériaux utilisés dans les piles à combustibles.

Des considérations environnementales imposent également l'élimination des impuretés présentes dans les gaz.

Dans le cas particulier de la synthèse Fischer-Tropsch, les spécifications requises en entrée de l'unité Fischer-Tropsch sont particulièrement sévères, les teneurs présentes dans le gaz de synthèse devant être généralement inférieures à 10 ppb poids pour les impuretés soufrées, inférieures à 10 ppb poids pour les impuretés azotées, et inférieures à 10 ppb poids pour les impuretés halogénées.

Les techniques habituellement employées pour éliminer les impuretés soufrées d'un gaz de synthèse sont de deux types : la désulfuration par lavage en utilisant un solvant, et la désulfuration en utilisant une masse de captation, qui elle se sulfure.

La technique de lavage au solvant peut mettre en oeuvre des amines telles que la monoéthanolamine (MEA), la diéthanolamine (DEA) ou la méthyldiéthanolamine (MDEA) qui sont utilisées classiquement pour l'adoucissement du gaz naturel. Dans ce cas, les composés à éliminer (H₂S, CO₂ réagissent chimiquement avec le solvant.

Lors de l'utilisation de MDEA, la teneur minimale en H₂S qu'il est possible d'obtenir après traitement du gaz est de quelques ppm vol. Avec l'utilisation de DEA, les performances obtenues en terme d'élimination de l'H₂S sont identiques, mais il est également possible d'éliminer le COS, à 50% pour une élimination poussée, une étape d'hydrolyse de COS en H₂S étant nécessaire en amont de la colonne d'absorption. L'HCN est également éliminé, au détriment toutefois d'une dégradation irréversible du solvant.

Le procédé Rectisol™ apporte une amélioration notable au niveau de l'élimination des impuretés H₂S, COS et CO₂ puisque des teneurs de 0,1 ppm poids à 1 ppm poids de soufre sont obtenues grâce à la mise en oeuvre d'une extraction par le méthanol à des températures très basses (-40 à -60°C). Ce procédé permet également l'élimination d'autres impuretés telles que les composés azotés (NH₃, HCN), et métaux lourds tels que l'arsenic et le mercure.

Peuvent également être employés des procédés mettant en oeuvre des solvants physiques tels que des solvants à base de mélanges de dialkyl-éther de polyéthylène glycol, ou ceux utilisant des solvants mixtes physique et chimique tels que les mélanges amines et sulfolane.

Les procédés utilisant le principe de l'adsorption sont basés soit sur l'adsorption physique ou sur la réaction de sulfuration d'un solide. Dans le premier cas, ce sont généralement des zéolithes qui sont utilisées (3A, 4A, 5A, 13X, clinoptilolite...) ou des alumines activées ou une combinaison des deux. Les limitations de l'adsorption physique ont trait à la co-adsorption des composés majoritaires, et la capacité d'adsorption en soufre de ces solides est limitée ainsi que leur durée de vie. De plus, ces solides sont très hydrophiles et il est donc nécessaire de procéder à une étape de déshydratation du gaz de synthèse avant celle d'adsorption.

Dans le cas de la purification par sulfuration, le soufre ou les impuretés à éliminer interagissent chimiquement avec une masse de captation pour former un sulfure. Parmi les solides utilisés comme masse de captation figurent par exemple des oxydes à base de cuivre, de zinc, de magnésium, de fer, de nickel ou de manganèse, seuls ou en mélange. L'alumine et la silice peuvent être utilisées comme support ou liant.

La demande de brevet WO 2006/008317 divulgue un procédé permettant d'éliminer le soufre contenu dans un gaz de synthèse à des teneurs allant jusqu'à 10 ppm en volume d'H₂S et COS, l'élimination du soufre étant poussée jusqu'à des teneurs de l'ordre du ppb en poids. Le procédé décrit dans ce document combine une première étape d'hydrolyse du COS en H₂S en présence d'eau et d'un catalyseur d'hydrolyse, et une deuxième étape d'élimination de l'H₂S formé en présence d'un adsorbant composé d'un métal ou oxyde métallique, seuls ou combinés choisi parmi Ag, Sn, Mo et Zn, déposé(s) sur un support inorganique. Le catalyseur mis en oeuvre dans la première étape d'hydrolyse est, quant à lui, un oxyde réfractaire choisi parmi les oxydes de silicium, cérium, gallium, zirconium, titane et aluminium.

Selon une autre demande de brevet (WO 2007/082896), l'élimination de H₂S et COS, et optionnellement HCN, est réalisée par mise en contact du gaz de synthèse avec un adsorbant contenant un métal ou un oxyde ou une combinaison de métaux ou oxydes choisis parmi Ag, Sn, Mo, Fe et Zn. L'adsorbant est préférentiellement ZnO. L'étape de désulfuration est suivie d'une étape de lavage avec une solution aqueuse pour éliminer le NH₃ formé.

Le document US 6,107,353 décrit un procédé d'élimination des impuretés contenues dans un gaz mettant en oeuvre une étape d'hydrolyse des composés HCN avec un catalyseur comprenant du TiO₂, une étape de lavage à l'eau de manière à retirer le NH₃ formé et une partie du HCN résiduel suivi éventuellement d'une adsorption visant à réduire encore la teneur en HCN et en NH₃. Ce document n'adresse pas le problème de la purification des impuretés soufrées, azotées et concomitamment halogénées contenues dans les gaz de synthèse.

La demanderesse a découvert un nouveau procédé d'élimination d'impuretés contenant à la fois du soufre telles H₂S et COS, des composés azotés tels HCN et NH₃, et des composés halogénés, ledit procédé permettant de purifier un gaz de synthèse contenant initialement ces impuretés à des teneurs généralement de 0,1 à 50 ppm poids pour l'H₂S, de 0,1 à 50 ppm poids pour le COS, de 0,1 à 50 ppm poids pour les composés azotés et de 0,1 à 50 ppm poids pour les composés halogénés. Le procédé selon l'invention permet d'obtenir un gaz purifié ne contenant plus que des impuretés soufrées à des teneurs inférieures à 10 ppb poids, voire 5 ppb poids et, de façon concomitante, des teneurs en impuretés azotées inférieures à 10 ppb poids, voire 5 ppb poids, et des teneurs en impuretés halogénées inférieures à 10 ppb poids, voire 5 ppb poids.

Le procédé selon l'invention peut être utilisé pour la purification des gaz de synthèse mis en oeuvre par exemple dans les installations de cogénération, dans les procédés de synthèse chimique tels les procédés de synthèse du méthanol.

Le procédé selon l'invention est particulièrement adapté à l'élimination d'impuretés contenues dans les gaz de synthèse utilisés comme charge d'unités Fischer-Tropsch. Les teneurs extrêmement faibles en impuretés soufrées, azotées et halogénées du gaz de synthèse ont en effet un impact bénéfique sur le niveau de conversion et sur la durée de vie du catalyseur Fischer-Tropsch.

### Description détaillée

L'invention a pour objet un procédé d'élimination d'impuretés soufrées, azotées et halogénées contenues dans un gaz de synthèse, telles que H₂S, COS, CS₂, HCN, NH₃, HF, HCl, HBr et HI, ledit procédé comprenant les étapes de la première revendication.

Le procédé selon l'invention peut être employé afin de purifier les gaz de synthèse mis en oeuvre dans les installations de cogénération, ou dans les procédés de synthèse chimique tels que les procédés de synthèse du méthanol.

De manière avantageuse, le procédé de l'invention peut être mis en oeuvre en amont d'une unité Fischer-Tropsch, de façon à éliminer les impuretés qui sont néfastes au bon fonctionnement de l'unité.

Le gaz de synthèse traité par le procédé de l'invention peut être obtenu via la transformation du gaz naturel, du charbon ou de la biomasse par des procédés tels que le vaporeformage, le reformage autotherme, ou l'oxydation partielle, ou encore via la décomposition du méthanol, ou à partir de tout autre procédé connu de l'Homme du métier. Il comprend au moins de l'hydrogène et du monoxyde de carbone.

Dans le cas particulier de la synthèse Fischer-Tropsch, le gaz de synthèse utilisé présente en général un rapport molaire H₂/CO compris entre 0,5 et 5,0, de manière préférée entre 1,2 et 3,1 et de manière encore plus préférée entre 1,5 et 2,6. Le gaz de synthèse comprend généralement en sus une faible proportion de dioxyde de carbone (CO₂) de préférence moins de 15% en volume, voire moins de 10% en volume, ainsi que de la vapeur d'eau.

Le gaz de synthèse utilisé comme charge du procédé selon l'invention peut être issu directement d'un de vaporeformage, d'une d'oxydation partielle ou d'un reformage autotherme. Tout ou partie du gaz peut également provenir d'une unité de conversion, du CO (water gaz shift selon la terminologie anglo-saxonne).

Le gaz de synthèse peut également contenir de nombreuses impuretés telles que des composés soufrés (H₂S, COS, CS₂), azotés (NH₃, HCN), des halogénés (HF, HCl, HBr, HI), et également des métaux, tels que le mercure, le sélénium, et/ou autres éventuellement sous forme de métaux carbonyles.

Les teneurs en impuretés présentes dans le gaz à l'issue de la gazéification sont fonction de la nature de la charge utilisée. Plus particulièrement, les teneurs en composés halogénés peuvent être environ comprises entre 10 et 1500 ppm poids ou encore entre 50 et 1000 ppm poids, les teneurs en composés soufrés peuvent être de l'ordre de 20 à 15000 ppm poids, voir de 100 à 10000 ppm poids.

Le gaz de synthèse brut, issu directement de la gazéification et ayant éventuellement été soumis à une étape de water gas shift afin d'ajuster le rapport H₂/CO, est généralement envoyé vers une ou plusieurs étapes de purification dédiée(s) à l'élimination des métaux présents ainsi que la majeure partie des composés soufrés, azotés et halogénés. La ou lesdites étapes peuvent être réalisées par lavage à l'aide d'un solvant. Le lavage au solvant peut être mis en oeuvre à l'aide d'un solvant contenant au moins une amine telle que par exemple la monoéthanolamine (MEA), la diéthanolamine (DEA) ou la méthyldiéthanolamine (MDEA), ou un solvant contenant au moins un alcool tel que le méthanol. Des solvants à base de mélanges de dialkyl-éther de polyéthylène glycol (PEG) tels que des diéthyl éther ou dibutyl éther de PEG peuvent également être employés, ou encore des solvants mixtes physique et chimique tels que ceux obtenus par exemple à partir de mélanges d'une amine, telle que la MDEA ou la diisopropanolamine (DIPA), avec du sulfolane et de l'eau.

Suite à ce traitement facultatif, les teneurs en impuretés contenues dans le gaz de synthèse atteignent généralement des teneurs de 0,1 à 50 ppm poids pour l'H₂S, de 0,1 à 50 ppm poids pour le COS, de 0,1 à 50 ppm poids pour les composés azotés et de 0,1 à 50 ppm poids pour les composés halogénés.

Alternativement, en fonction de la nature des impuretés présentes initialement et de leurs teneurs, la purification ultime du gaz de synthèse peut être opérée à la suite de l'étape de purification précédente ou en substitution de celle-ci à l'aide du procédé selon l'invention. Celui-ci permet d'obtenir un gaz purifié ne contenant plus que des impuretés soufrées à des teneurs inférieures à 10 ppb poids, le plus souvent inférieures à 5 ppb poids et, de façon concomitante, des teneurs en impuretés azotées inférieures à 10 ppb poids, voire 5 ppb poids, et des teneurs en impuretés halogénées inférieures à 10 ppb poids, voire 5 ppb poids.

Le procédé selon l'invention peut se décliner selon plusieurs variantes, en fonction de la nature des impuretés présentes et de leur teneurs, ces variantes différant par le nombre et l'ordre des étapes mises en jeu.

Lesdites étapes sont mentionnées dans la première revendication.

L'étape a) du procédé selon l'invention peut être opérée sur la totalité de la charge (gaz de synthèse) ou seulement sur une fraction de ladite charge. Une première variante traite du cas le plus général, pour lequel tous les types d'impuretés, halogénées, soufrées et azotées, sont présents dans le gaz à traiter. Elle consiste en l'enchaînement successif des trois étapes a), b) et c) dans cet ordre. Ces étapes sont décrites ci-après plus en détail.

Selon une variante du procédé selon l'invention, ledit procédé peut comprendre en outre entre les étapes b) et c) une étape d'hydrolyse du COS résiduel.

### Etape a:

Dans la première étape du procédé de l'invention (étape a) d'hydrolyse/captation, les composés COS et HCN sont hydrolysés, et donnent respectivement les produits de réaction H₂S et NH₃.

Il est possible de réaliser cette étape a) une seul fois dans le procédé selon l'invention. Toutefois, selon une variante préférée, cette étape est effectuée au moins 2 fois et de préférence une première fois sur tout ou partie de la charge et avant l'étape b (première mise en oeuvre de l'étape a), puis une seconde fois entre les étapes b) et c) du procédé selon l'invention. Cette deuxième réalisation de l'étape b peut être mise en oeuvre sur le même catalyseur ou sur un catalyseur différent. Elle permet notamment d'éliminer le COS résiduel qui éventuellement n'a pas été totalement éliminé lors de la première mise en oeuvre de l'étape a)

L'hydrolyse est opérée dans un réacteur contenant un catalyseur à base de TiO₂ tel que celui décrit par exemple dans le brevet FR 2 830 466.

Le catalyseur mis en oeuvre dans l'étape a) du procédé de l'invention comprend entre 30% poids et 99% poids de TiO2 et entre 1 %poids et 30 %poids d'au moins un sulfate d'un métal alcalino-terreux choisi parmi le calcium, le baryum, le strontium et le magnésium. Ledit sulfate est préférentiellement du sulfate de calcium.

Selon une forme préférée de mise en oeuvre, ledit catalyseur comprend entre 45 %poids et 98 %poids, très préférentiellement entre 60 %poids et 95 %poids, voire entre 70 %poids et 90 %poids de TiO₂.

De préférence ledit catalyseur comprend entre 3 %poids et 25 %poids et de manière plus préférée entre 5 %poids et 15 %poids d'au moins un sulfate d'un métal alcalino-terreux choisi parmi le calcium, le baryum, le strontium et le magnésium. Ledit sulfate est préférentiellement du sulfate de calcium.

De préférence, ledit catalyseur comprend également au moins un composé choisi parmi les argiles, les silicates, les alumines, le sulfate de titane, les fibres céramiques, de préférence les argiles ou les silicates, éventuellement les alumines, de manière très préférée les argiles, à une teneur totale comprise entre 0,1 %poids et 30 %poids, de préférence comprise entre 0,5 %poids et 25 %poids, de manière plus préférée comprise entre 1 %poids et 20 %poids, et de manière très préférée comprise entre 5 %poids et 15 %poids.

De manière plus préférée, ledit catalyseur comprend en outre ente 0,1 et 20 %poids, de préférence entre 0,5 %poids et 15 %poids et plus préférentiellement entre 1 %poids et 10 %poids, d'un composé dopant ou d'une combinaison de composés dopants choisis parmi les composés de fer, de vanadium, de cobalt, de nickel, de cuivre, de molybdène et de tungstène. Le ou les composés dopants sont préférentiellement sous forme d'oxydes ou de sulfures. De préférence ledit composé dopant est du fer, du vanadium, du nickel ou du molybdène, de manière très préférée du fer ou du vanadium.

Selon une variante particulièrement avantageuse de mise en oeuvre, ledit catalyseur comprend:
- entre 60 %poids et 95 %poids, voire entre 70 %poids et 90 %poids, d'oxyde de titane,
- entre 3 %poids et 25 %poids, voire entre 5 %poids et 15 % poids de sulfate d'un métal alcalino-terreux choisi parmi le calcium, le baryum, le strontium et le magnésium,
- entre 0,1 %poids et 20 %poids, voire entre 1 et 10 % poids d'un composé dopant ou d'une combinaison de composés dopants choisis parmi des composés de fer, de vanadium, de cobalt, de nickel, de cuivre, de molybdène et de tungstène, par exemple sous forme d'oxyde ou de sulfure.

Cet apport de dopant(s) peut être effectué à l'occasion de la mise en forme de l'oxyde de titane et du sulfate d'alcalino-terreux, ou postérieurement à cette opération. Dans cette dernière hypothèse, une imprégnation à sec d'une ou plusieurs solutions de sels métalliques est préférée, la préparation s'achevant conventionnellement par une opération thermique.

Le catalyseur peut se présenter sous toute forme connue : poudre, billes, extrudés, monolithes, matériau concassé, etc. La forme préférée du catalyseur est l'extrudé, qu'il soit cylindrique ou polylobé. Dans le cas d'une mise en forme par malaxage suivi d'une extrusion, la section transversale de l'extrudé est avantageusement comprise entre 0,5 et 8 mm, de préférence comprise entre 0,8 et 5 mm.

Ledit catalyseur peut être mis en oeuvre lors de l'étape a) soit dans un réacteur en lit fixe, soit dans un réacteur radial, ou bien encore dans un lit fluidisé, avec ou sans utilisation de plateau distributeur.

L'étape a) d'hydrolyse/captation est opérée à une pression comprise entre 0,5 et 10 MPa, de préférence entre 1,5 et 3,5 MPa, et de manière encore plus préférée entre 2,0 et 3,0 MPa, à une température comprise entre 100 et 350°C, de préférence entre 100 et 250°C, et de manière encore plus préférée à une température égale à 200°C.

A la sortie de l'étape a), le gaz de synthèse ne contient plus comme impuretés majoritaires que H₂S et NH₃ formés lors de l'hydrolyse de COS et HCN. Les teneurs en H₂S et NH₃ contenues dans le gaz de synthèse à l'issue de l'étape a) sont fonction des quantités initiales présentes dans le gaz avant l'étape a) et généralement comprises entre 0,1 ppb poids et 100 ppm poids pour H₂S et entre 0,1 ppb poids et 50 ppm poids pour NH₃. La teneur en impuretés halogénées est inférieure à 10 ppb poids, voire inférieure à 5 ppb poids.

### Etape b:

Cette étape de lavage est réalisée au moyen d'au moins solvant. L'étape b) de lavage par solvant vise à éliminer le NH₃ formé lors de l'étape a), ainsi que les éventuelles impuretés autres qu'azotées, halogénées et soufrées initialement contenues dans le gaz de synthèse et sur lesquelles l'étape a) n'aurait pas eu d'action. Elle est par exemple réalisée dans une tour de lavage mettant en oeuvre un ou plusieurs solvants. Le ou les solvant(s) est une solution comprenant un composé choisi parmi l'eau, la soude, les amines telles que par exemple la monoéthanolamine (MEA), le diéthanolamine (DEA), l'aminoéthyléthanolamine (AEEA), la méthyldiéthanolamine (MDEA), la triéthanolamine (TEA), la diisopropanolamine (DIPA), et les alcools tel que par exemple le méthanol, ou leurs mélanges. Des solvants à base de mélanges de dialkyl-éther de polyéthylène glycol (PEG) tels que des diéthyl éther ou dibutyl éther de PEG peuvent également être employés, ou encore des solvants mixtes physique et chimique tels que ceux obtenus par exemple à partir de mélanges d'une amine, telle que la MDEA ou la DIPA, avec du sulfolane et de l'eau.

Ainsi, le solvant utilisé pour le lavage du gaz lors de l'étape b) peut éventuellement être une solution contenant un composé seul ou en mélange choisi parmi l'eau, la soude, les amines, les alcools, les dialkyl-éther de polyéthylène glycol, ou les mélanges amines et sulfolane.

La tour de lavage peut être équipée de tout type d'internes favorisant le contact gaz/liquide connus de l'Homme du métier (plateaux, garnissage vrac, garnissage structuré), le solvant étant pulvérisé en haut de ladite tour et le gaz circulant à contre-courant dans celle-ci. L'étape b) de lavage par solvant est opérée à une pression identique à celle de l'étape a), comprise entre 0,5 et 10 MPa, de préférence entre 1,5 et 3,5 MPa, et de manière encore plus préférée entre 2,0 et 3,0 MPa, à une température fonction du solvant utilisé.

Si le solvant mis en oeuvre est une solution d'eau ou de soude, la température de celui-ci est comprise entre 30 et 250°C, de préférence entre 30 et 100°C.

Dans le cas de la mise en oeuvre d'une amine, la température est comprise entre 30 et 250°C, de préférence entre 30 et 100°C.

Dans le cas de la mise en oeuvre de dialkyl-éther de polyéthylène glycol, la température est généralement comprise entre -30 et 175°C, de préférence entre -10 et 100°C.

Dans le cas de la mise en oeuvre de mélanges d'amines et sulfolane, la température est généralement comprise entre -30 et 150°C, de préférence entre -10 et 100°C.

Dans le cas d'un procédé de lavage par le méthanol, la température du solvant est généralement comprise entre -80 et 200°C, préférentiellement entre -60 et 100°C, typiquement de -60 à 40°C.

Il est également possible, selon certaines variantes préférées, de réaliser successivement plusieurs étapes b de lavage avec le même solvant ou un mélange de plusieurs solvants ou encore et préférentiellement avec des solvants successifs différents. Ainsi par exemple, il est possible de réaliser tout d'abord un lavage avec de l'eau afin d'éliminer préférentiellement l'ammoniac (NH3) formé lors de l'hydrolyse d'HCN, puis de réaliser un lavage des gaz acides au moyen d'un solvant chimique tel qu'une amine ou un mélange amine-sulfolane, ou d'un solvant physique tel que qu'un alcool, de préférence le méthanol.

De préférence, lorsque l'étape b comprend au moins les 2 étapes décrites ci-avant, le lavage à l'eau et l'enlèvement des gaz acides sont effectués en série et ces 2 étapes sont localisées entre l'étape a) d'hydrolyse et l'étape c) de désulfuration.

A la sortie de l'étape b), le gaz de synthèse contient généralement une teneur en NH₃ inférieure à 10 ppb poids, voire inférieure à 5 ppb poids de NH₃. Le lavage par solvant permet en outre de retirer d'autres impuretés éventuellement présentes lors du traitement tels que des métaux ou des métaux carbonyles.

### Etape c:

Le gaz de synthèse après l'étape de lavage par solvant est ensuite introduit dans une unité de désulfuration (étape c)) mettant en oeuvre une masse de captation ou un adsorbant connu de l'Homme du métier, ledit adsorbant étant éventuellement régénérable. Ce solide peut classiquement contenir un composé de type métal, oxyde, zéolithe, ou bien encore carbonate, et au moins un élément choisi dans le groupe formé par Ca, Mg, Mn, Fe, Ni, Cu, Zn, Ag, Sn, La, Ce. De manière préférée, l'étape de désulfuration est mise en oeuvre avantageusement à l'aide d'une masse de captation contenant majoritairement du ZnO à une teneur comprise entre 85% poids et 100% poids , et de manière très préférée comprise entre 95% poids et 100% poids.

Des liants peuvent être utilisés tels que la silice, l'alumine ou un précurseur d'alumine, les argiles telles que la bentonite, la kaolinite, la montmorillonite, seuls ou en mélange, afin de conférer une résistance mécanique suffisante au solide mis en forme. La masse de captation peut se présenter sous la forme d'extrudés préférentiellement cylindriques ou multilobés, de sphères ou de pastilles.

Dans certains cas, par exemple lorsque le solide utilisé à l'étape c) contient de l'oxyde de zinc (ZnO), le solide actif pour l'élimination d'H2S peut être également actif vis-à-vis de l'hydrolyse du COS. Dans ce cas, l'étape c est à la fois une étape de désulfuration et simultanément une étape d'élimination du COS résiduel. Cette variante est particulièrement utile dans le cas où la première étape a) d'hydrolyse n'a pas permis d'éliminer totalement le COS.

Ladite masse de captation ou adsorbant peut être mise en oeuvre soit dans un réacteur en lit fixe, soit dans un réacteur radial, ou bien encore dans un lit fluidisé, avec ou sans utilisation de plateau distributeur.

L'étape c) de désulfuration est opérée à une pression identique à celle des étapes a) et b), comprise entre 0,5 et 10 MPa, de préférence entre 1,5 et 3,5 MPa, et de manière encore plus préférée entre 2,0 et 3,0 MPa, à une température comprise entre 100 et 400°C, de préférence entre 150 et 350°C, et de manière encore plus préférée à une température égale à 200°C.

A l'issue de l'étape c), le gaz de synthèse est pratiquement exempt d'impuretés soufrées, azotées et halogénées, les teneurs respectives en ces impuretés étant inférieure à 10 ppb poids, voire 5 ppb poids pour la totalité des composés soufrés, inférieure à 10 ppb poids, voire 5 ppb poids pour la totalité des composés azotés, et inférieure à 10 ppb poids, voire 5 ppb poids pour la totalité des composés halogénés.

A l'issue de l'étape c), le gaz de synthèse purifié est admis par exemple dans une unité de synthèse Fischer-Tropsch ou dans une unité de synthèse du méthanol, ou tout autre procédé de conversion du gaz de synthèse.

### Autres variantes du procédé selon l'invention:

Deux autres variantes du procédé selon l'invention s'appliquent dans le cas particulier où les impuretés azotées sont absentes de la charge à traiter. Dans ces deux cas, les impuretés à éliminer sont les composés soufrés et halogénés, et la mise en oeuvre de l'étape de lavage par solvant b) n'est pas nécessaire.

Selon une deuxième variante, le procédé selon l'invention comprend l'enchaînement de l'étape a) d'hydrolyse de COS et d'élimination des halogénés, et de l'étape c) de désulfuration sur une masse de captation ou adsorbant, l'étape optionnelle b) de lavage n'étant pas présente. Cette variante est notamment préférée en l'absence d'impuretés azotées dans la charge à traiter.

Selon une troisième variante, les étapes a) et c) sont effectuées conjointement dans un seul et même réacteur en lit fixe, dans lequel sont disposés le premier solide à base de TiO₂ actif vis-à-vis de l'hydrolyse de COS et de la capture des halogénés ainsi que la masse de captation désulfurante. Le remplissage du réacteur s'effectue de manière à ce que la masse de captation désulfurante soit placée en aval du catalyseur à base de TiO₂. De cette façon, le catalyseur permet d'éliminer les impuretés halogénées et le COS présents dans le flux entrant de gaz. L'H₂S formé lors de l'hydrolyse de COS est capté directement *in situ* par la masse de captation également placée dans le réacteur en amont du catalyseur à base de TiO₂. Il est également envisageable de disposer dans le réacteur des couches successives de catalyseur à base de TiO₂ et de masse de captation du H₂S.

Selon d'autres variantes, il est également possible de répéter l'enchaînement des étapes afin d'améliorer l'efficacité du procédé, en particulier l'enchaînement des étapes a) et c) afin d'augmenter le taux de conversion du COS.

Selon d'autres variantes, le procédé selon l'invention comprend en outre, entre les étapes b) et c), une étape d'hydrolyse du COS résiduel.

Le procédé selon l'invention peut également comprendre plusieurs sections d'hydrolyse du COS.
Ainsi certaines variantes préférées du procédé selon l'invention comprennent les étapes suivantes :
- une étape a) conjointe d'hydrolyse de COS et d'HCN et de captation des composés halogénés, opérée sur tout ou partie de la charge via l'utilisation d'un catalyseur à base de TiO₂,
- une étape b) de lavage par au moins un solvant,
- une étape d'hydrolyse du COS résiduel opérée soit selon le mode opératoire de l'étape a), soit selon le mode opératoire de l'étape c) lorsque le solide utilisé à l'étape c) permet de réaliser également l'hydrolyse du COS,
- une étape c) de désulfuration sur une masse de captation ou un adsorbant.

Selon une variante A du procédé selon l'invention:
- une fraction du gaz de synthèse issu de la gazéification (section de production de gaz de synthèse) est traité dans une unité de conversion du CO avec de l'eau (water gas shift selon la terminologie anglo-saxonne),
- la fraction complémentaire est envoyé à l'étape a) d'hydrolyse de COS et HCN,
- l'effluent issu de l'unité de conversion du CO est mélangé à la fraction complémentaire du gaz de synthèse traitée selon l'étape a),
- le mélange obtenu est traité selon l'étape b) par lavage avec au moins un solvant,
- l'effluent issu du lavage est traité à nouveau dans une étape d'hydrolyse du COS, afin d'éliminer le COS résiduel,
- l'effluent issu de l'hydrolyse du COS résiduel est traité selon l'étape c) de désulfuration

Selon une variante B du procédé selon l'invention:
- une fraction du gaz de synthèse issu de la gazéification (section de production de gaz de synthèse) est traité dans une unité de conversion du CO avec de l'eau et la fraction complémentaire n'est pas traitée,
- l'effluent issu de l'unité de conversion du CO est mélangé à la fraction complémentaire du gaz de synthèse non traitée ,
- le mélange ainsi obtenu est envoyé à l'étape a) d'hydrolyse de COS et HCN,
- le mélange obtenu est traité selon l'étape b) par lavage avec au moins un solvant,
- l'effluent issu du lavage est traité à nouveau dans une étape d'hydrolyse du COS, afin d'éliminer le COS résiduel,
- l'effluent issu de l'hydrolyse du COS résiduel est traité selon l'étape c) de désulfuration.

Selon d'autres variantes préférées, les étapes d'hydrolyse du COS résiduel et de désulfuration selon l'étape c) des variantes A et B selon l'invention sont réalisées simultanément en présence d'un solide actif le solide actif pour l'élimination d'H2S et l'hydrolyse du COS.

Le gaz de synthèse purifié selon le procédé de l'invention peut également être mis en oeuvre dans une installation de cogénération, ou dans une unité de synthèse chimique, telle qu'une unité de synthèse du méthanol.

Dans les installations de cogénération, les gaz de synthèse sont généralement mis en oeuvre à une pression comprise entre 1 et 10 MPa, et à une température comprise entre 100 et 280°C.

La synthèse du méthanol est généralement mise en oeuvre dans les procédés les plus récents sous une pression comprise entre 1 et 15 MPa, de préférence comprise entre 5 et 10 MPa et à une température comprise entre 150 et 300°C, de préférence comprise entre 220 et 280°C.

Avantageusement, le gaz de synthèse purifié selon le procédé de l'invention peut être admis dans une unité de synthèse Fischer-Tropsch, opérant soit en lit fluidisé, soit en lit fixe (réacteur contenant un catalyseur en lit fixe ou bien encore plusieurs lits de catalyseur dans un même réacteur), ou préférentiellement dans un réacteur triphasique (mise en oeuvre en "slurry" selon la terminologie anglo-saxonne) comprenant le catalyseur en suspension dans une phase liquide essentiellement inerte et la phase gazeuse réactive (gaz de synthèse).

La synthèse Fischer-Tropsch est généralement mise en oeuvre sous une pression comprise entre 0,1 et 15 MPa, de préférence comprise entre 1,5 et 5 MPa et à une température comprise entre 150 et 400°C, de préférence comprise entre 170 et 350°C. Le catalyseur utilisé pour la synthèse Fischer-Tropsch est généralement un catalyseur contenant du cobalt ou du fer supporté ou non, le support étant préférentiellement choisi parmi les oxydes du groupe formé par l'alumine, la silice, la zircone, l'oxyde de titane, l'oxyde de magnésium ou leurs mélanges. Le procédé de l'invention est plus particulièrement adapté lorsque le catalyseur de synthèse Fischer-Tropsch comprend du cobalt supporté sur alumine.

### EXEMPLES:

La portée de l'invention est illustrée par les exemples 1 à 6. Les exemples 1 et 2 se rapportent plus particulièrement à l'étape a), en décrivant l'action du catalyseur d'hydrolyse sur l'élimination des impuretés halogénées présentes dans le gaz.

L'exemple 3 décrit l'enchaînement des trois étapes a), b) et c), lorsque le gaz contient des impuretés soufrées, azotées et halogénées. L'exemple 4, non conforme à l'invention, met en évidence la nécessité de la présence de l'étape de lavage b) lorsque des impuretés azotées sont présentes. Les exemples 5 et 6 illustrent les cas où le gaz à traiter est exempt d'impuretés azotées.

### Exemple 1 (selon l'invention) :

Un gaz de synthèse contenant approximativement 61 %volume de CO, 19 %volume de H₂, 10 %volume. de N₂ et 10%volume de CO2 comme composés majoritaires, ainsi que des impuretés à des teneurs de 10000 ppm poids de H₂S, 1200 ppm poids de COS, 5 ppm poids de HCl, 0,8 ppm poids de HF, 4 ppm poids de HBr, 1,5 ppm poids de HI, 100 ppm poids de HCN, et 3 ppm poids de NH₃ tels que décrits dans le Tableau 1, est utilisé comme charge du procédé selon l'invention.

Le catalyseur utilisé lors de l'étape a) d'hydrolyse/captation est constitué de 90% poids de TiO₂, et de 10 %poids de CaSO₄. Le solide est mis en oeuvre sous la forme d'extrudés de diamètre 2 mm. La température de l'étape d'hydrolyse/captation est fixée à 180°C, la pression du gaz est maintenue à 2,3 MPa. La VVH (vitesse volumique horaire) est fixée à 2500 h⁻¹.

La composition du gaz en sortie de la zone d'hydrolyse/captation est donnée dans le Tableau 1.

**Tableau 1. Quantités d'impuretés présentes dans le flux de gaz de synthèse en entrée et en sortie de l'étape a).**

| Impuretés présentes dans le gaz | Teneur (ppm poids) avant purification | Teneur (ppb poids) après purification |
|---|---|---|
| H₂S | 10000 | Non analysé |
| NH₃ | 3 | Non analysé |
| COS | 1200 | < 5 |
| HCN | 100 | < 5 |
| HCl | 5 | < 5 |
| HF | 0,8 | < 5 |
| HBr | 4 | < 5 |
| HI | 1,5 | < 5 |

Le COS, ainsi que le HCN et les composés halogénés initialement présents sont bien éliminés du gaz après traitement sur le solide.

D'autre part, le solide utilisé dans l'étape a) du procédé a été analysé par une technique de dosage semi-quantitative basée sur une analyse par Fluorescence X.

La composition du solide avant et après mise en oeuvre dans le procédé est donnée dans le Tableau 2. On constate effectivement que les impuretés halogénées initialement présentes dans le gaz à traiter ont été piégées sur le solide.

**Tableau 2. Teneurs en composés halogénés mesurées sur le solide avant et après mise en oeuvre de l'étape a).**

| Impuretés halogénées | Teneur (% poids) initiale sur le solide | Teneur (% poids) après mise en oeuvre du solide dans le procédé d'hydrolyse/captation |
|---|---|---|
| Fluor | Non détecté | 0,05 |
| Chlore | Non détecté | 0,3 |
| Iode | Non détecté | 0,1 |
| Brome | Non détecté | 0,24 |

### Exemple 2 (selon l'invention) :

Un gaz de synthèse contenant approximativement 36 %volume de CO, 24 %volume de H₂, 20 %volume de H₂O et 18,5 %volume de CO2 comme composés majoritaires, ainsi que des impuretés à des teneurs de 10000 ppm poids de H₂S, 800 ppm poids de COS, 25 ppm poids de HCl, 1,6 ppm poids de HBr, 640 ppm poids de HCN, et 2000 ppm poids de NH₃ est utilisé comme charge du procédé selon l'invention.

Le catalyseur utilisé lors de l'étape a) d'hydrolyse/captation est constitué de 85,5% poids de TiO₂, 0,5 % poids d'Al₂O₃ , et 10% poids de CaSO₄. Le solide est mis en oeuvre sous la forme d'extrudés de diamètre 2 mm. La température de l'étape d'hydrolyse/captation est fixée à 190°C, la pression du gaz est maintenue à 2,5 MPa. La VVH (vitesse volumique horaire) est fixée à 4000 h⁻¹.

La composition du gaz en sortie de la zone d'hydrolyse/captation est donnée dans le tableau 3:

**Tableau 3. Quantités d'impuretés présentes dans le flux de gaz de synthèse en entrée et en sortie de l'étape a).**

| Impuretés présentes dans le gaz | Teneur (ppm poids) avant purification | Teneur (ppb poids) après purification |
|---|---|---|
| H₂S | 10000 | Non analysé |
| NH₃ | 2000 | Non analysé |
| COS | 800 | <5 |
| HCN | 640 | <5 |
| HCl | 25 | <5 |
| HBr | 1,6 | <5 |

Le COS, ainsi que le HCN et les composés halogénés initialement présents sont bien éliminés du gaz après traitement sur le solide.

Le solide utilisé dans le procédé lors de l'expérience a été analysé par une technique de dosage semi-quantitative basée sur une analyse par Fluorescence X. La composition du solide avant et après mise en oeuvre dans le procédé est donnée dans le Tableau 4. On constate effectivement que le chlore et le brome initialement présents dans le gaz à traiter ont été piégés sur le solide.

**Tableau 4. Teneurs en composés halogénés mesurées sur le solide avant et après mise en oeuvre de l'étape a).**

| Impuretés halogénées | Teneur (% poids) initiale sur le solide | Teneur (% poids) après mise en oeuvre du solide dans le procédé d'hydrolyse/captation |
|---|---|---|
| Chlore | Non détecté | 0,18 |
| Brome | Non détecté | 0,012 |

### Exemple 3 (selon l'invention) :

Un gaz de synthèse contenant approximativement 28 %volume de CO, 60 %volume de H₂, 2 %volume . de H₂O et 10 %volume d'argon comme composés majoritaires, ainsi que des impuretés à des teneurs de 20 ppm poids de H₂S, 2 ppm poids de COS, 5 ppm poids de HCl, 10 ppm poids de HCN, et 15 ppm poids de NH₃ tels que décrits dans le Tableau 5 est utilisé comme charge du procédé selon l'invention.

Le catalyseur utilisé lors de l'étape a) d'hydrolyse/captation est constitué de 85,5% poids de TiO₂, 0,5 % poids d'Al₂O₃, et 10% poids de CaSO₄. La masse de captation utilisée lors de l'étape de désulfuration c) est constituée de 95% poids de ZnO, et de 5% poids d'argile de type kaolinite. Dans le cas de chaque solide, il s'agit d'extrudés de diamètre 2 mm.

La température des étapes a) et c) est fixée à 200°C, la pression du gaz est maintenue à 2,5 MPa dans l'ensemble des étapes du procédé. La VVH (vitesse volumique horaire) est fixée à 3000 h⁻¹.

En sortie de la zone d'hydrolyse/captation (étape a)), les impuretés présentes dans le gaz consistent uniquement en H₂S et NH₃ (composés présents initialement, auxquels s'ajoutent les produits d'hydrolyse, du COS et du HCN). D'autre part, le HCl a été piégé sur le catalyseur de TriO₂.

La majeur partie de NH₃ est éliminée à l'issue de l'étape de lavage (étape b)). La température de l'eau est fixée à 90°C.

L'étape c) de désulfuration sur masse de captation à base de ZnO permet de retirer le H₂S restant à des teneurs résiduelles de l'ordre du ppb poids.

Les compositions du gaz entre chaque étape de purification du procédé sont présentées dans le Tableau 5.

**Tableau 5. Quantités d'impuretés présentes dans le flux de gaz de synthèse en entrée et en sortie de chaque étape de purification mise en oeuvre dans le procédé.**

| Impuretés présentes dans le gaz | Teneur (ppm poids) entrée étape a) | Teneur (ppb poids) sortie étape a) | Teneur (ppb poids) sortie étape de lavage b) | Teneur (ppb poids) sortie étape de désulfuration c) |
|---|---|---|---|---|
| H₂S | 20 | 22000 | 20000 | <5 |
| COS | 2 | <5 | <5 | <5 |
| HCl | 5 | <5 | <5 | <5 |
| HCN | 10 | <5 | <5 | <5 |
| NH₃ | 15 | 25000 | <5 | <5 |

Les résultats présentés dans le Tableau 5 mettent en évidence les très faibles teneurs en impuretés soufrées, azotées et halogénées contenues dans le gaz de synthèse à la sortie du procédé de l'invention.

### Exemple 4 (non conforme) :

L'expérience explicitée dans l'exemple 3 a été reproduite en conservant tous les paramètres à l'identique mais sans l'étape de lavage b). Dans ce cas le NH₃ formé à l'issue de l'étape a) d'hydrolyse/captation n'est pas éliminé du gaz de synthèse. Les compositions du gaz entre chaque étape de purification sont présentées dans le tableau 6.

**Tableau 6. Quantités d'impuretés présentes dans le flux de gaz de synthèse en entrée et en sortie de chaque étape de purification mise en oeuvre dans le procédé (sans étape de lavage).**

| Impuretés présentes dans le gaz | Teneur (ppm poids) entrée étape a) | Teneur (ppb poids) sortie étape a) | Teneur (ppb poids) sortie étape de désulfuration c) |
|---|---|---|---|
| H₂S | 20 | 22000 | <5 |
| COS | 2 | <5 | <5 |
| HCl | 5 | <5 | <5 |
| HCN | 10 | <5 | <5 |
| NH₃ | 15 | 25000 | 25000 |

### Exemple 5 (selon l'invention) :

Un gaz de synthèse contenant approximativement 28 %volume de CO, 60 %volume de H₂, 2 %volume de H₂O et 10 %volume d'argon comme composés majoritaires, ainsi que des impuretés à des teneurs de 20 ppm poids de H₂S, 2 ppm poids de COS, 5 ppm poids de HCl tels que décrits dans le tableau 7 est utilisé comme charge du procédé selon l'invention. Dans ce cas, le gaz ne contient pas d'impuretés azotées tels que NH₃ et HCN.

Le procédé mis en oeuvre réalise l'enchaînement des étapes a) d'hydrolyse/captation et c) de désulfuration, sans étape de lavage intermédiaire.

Le catalyseur utilisé lors de l'étape a) d'hydrolyse/captation est constitué de 85,5% poids de TiO₂, 0,5 % poids d'Al₂O₃, et 10% poids de CaSO₄. La masse de captation utilisée lors de l'étape de désulfuration c) est constituée de 95% poids de ZnO, et de 5% poids d'argile de type kaolinite. Dans le cas de chaque solide, il s'agit d'extrudés de diamètre 2 mm.

La température des étapes a) et c) est fixée à 200°C, la pression du gaz est maintenue à 2,5 MPa dans l'ensemble des étapes du procédé. La VVH (vitesse volumique horaire) est fixée à 3000 h⁻¹.

En sortie de la zone d'hydrolyse/captation (étape a)), les impuretés présentes dans le gaz consistent uniquement en H₂S. Il s'agit en partie du H₂S présent initialement, auquel s'ajoute le H₂S produit lors de l'hydrolyse de COS. Par ailleurs, le HCl a été piégé sur le catalyseur à base de TiO₂.

L'étape c) de désulfuration sur masse de captation à base de ZnO permet de retirer le H₂S restant à des teneurs résiduelles de l'ordre du ppb poids.

Les compositions du gaz entre chaque étape de purification du procédé sont présentées dans le tableau 7.

**Tableau 7. Quantités d'impuretés présentes dans le flux de gaz de synthèse en entrée et en sortie de chaque étape de purification mise en oeuvre dans le procédé.**

| Impuretés présentes dans le gaz | Teneur (ppm poids) entrée étape a) | Teneur (ppb poids) sortie étape a) | Teneur (ppb poids) sortie étape de désulfuration c) |
|---|---|---|---|
| H₂S | 20 | 22000 | < 5 |
| COS | 2 | <5 | <5 |
| HCl | 5 | <5 | <5 |

Les résultats présentés dans le tableau 7 mettent en évidence les très faibles teneurs en impuretés soufrées et halogénées contenues dans le gaz de synthèse à la sortie du procédé selon l'invention.

### Exemple 6 (selon l'invention) :

Un gaz de synthèse contenant approximativement 28 %volume de CO, 60 %volume de H₂, 2 %volume de H₂O et 10 %volume d'argon comme composés majoritaires, ainsi que des impuretés à des teneurs de 20 ppm poids de H₂S, 2 ppm poids de COS, 5 ppm poids de HCl tels que décrits dans le Tableau 8 est utilisé comme charge du procédé selon l'invention. Dans ce cas, le gaz ne contient pas d'impuretés azotées tels que NH₃ et HCN.

L'exemple précédent est reproduit ici en combinant les étapes a) et c) en une seule et même étape, l'étape b) de lavage n'étant pas présente.

Le catalyseur à base de TiO₂ permettant l'hydrolyse de COS et la capture des halogénés et la masse de captation désulfurante à base de ZnO sont placés dans un réacteur en lit fixe. Le remplissage du réacteur est effectué de manière à ce que le solide à base de ZnO soit placé dans le réacteur en aval du catalyseur à base de TiO₂. Le remplissage du réacteur est effectué en respectant une répartition équivalente 50-50 des deux solides.

Le catalyseur utilisé pour l'hydrolyse/captation (situé dans le réacteur, partie en amont) est constitué de 85,5% poids de TiO₂, 0,5 % poids d'Al₂O₃, et 10% poids de CaSO₄. La masse de captation utilisée pour la désulfuration (dans la partie aval du réacteur) est constituée de 95% poids de ZnO, et de 5% poids d'argile de type kaolinite. Dans le cas de chaque solide, il s'agit d'extrudés de diamètre 2 mm.

La température du gaz à traiter dans le procédé est fixée à 200°C, la pression du gaz est maintenue à 2,5 MPa. La VVH (vitesse volumique horaire) est fixée à 1500 h⁻¹.

En sortie du réacteur, l'HCl, le COS ainsi que l'H₂S ne sont plus présents dans le gaz qu'à des teneurs résiduelles de l'ordre du ppb poids.

L'HCl a été piégé sur le catalyseur à base de TiO₂., qui a permis d'hydrolyser également le COS initialement présent dans la charge. La masse de captation disposée dans le même réacteur à la suite du catalyseur à base de TiO₂ permet de capter immédiatement le H₂S.

Les compositions du gaz avant et après l'étape de purification du procédé sont présentées dans le Tableau 8.

**Tableau 8. Quantités d'impuretés présentes dans le flux de gaz de synthèse avant et après l'étape de purification mise en oeuvre dans le procédé.**

| Impuretés présentes dans le gaz | Teneur (ppm poids) entrée étape a) | Teneur (ppb poids) sortie étape de désulfuration c) |
|---|---|---|
| H₂S | 20 | <5 |
| COS | 2 | <5 |
| HCl | 5 | <5 |

Les résultats présentés dans le Tableau 8 mettent en évidence les très faibles teneurs en impuretés soufrées et halogénées contenues dans le gaz de synthèse à la sortie du procédé de l'invention.

## Revendications

1. Procédé d'élimination d'impuretés soufrées, azotées et halogénées contenues dans un gaz de synthèse, telles que H₂S, COS, CS₂, HCN, NH, HF, HCl, HBr et HI, ledit procédé comprenant :
a) une étape conjointe d'hydrolyse de COS et d'HCN et de captation des composés halogénés utilisant un catalyseur à base de TiO₂ comprenant entre 30 %poids et 99 %poids de TiO₂ et entre I %poids et 30 %poids d'au moins un sulfate d'un métal alcalino-terreux choisi parmi le calcium, le baryum, le strontium et le magnésium.
b) une étape de lavage par au moins un solvant, ledit solvant étant une solution contenant un composé seul ou en mélange choisi parmi l'eau, la soude, les amines, les alcools, les dialkyl-éther de polyéthylène glycol, ou les mélanges amines et sulfolane, visant à éliminer le NH₃ formé lors de l'étape a), ainsi que les éventuelles impuretés autres qu'azotées, halogénées et soufrées initialement contenues dans le gaz de synthèse et sur lesquelles l'étape a) n'aurait pas eu d'action,
c) une étape de désulfuration sur une masse de captation ou adsorbant.

2. Procédé selon la revendication 1 dans lequel les étapes a), b) et c) sont réalisées successivement dans cet ordre.

3. Procédé selon la revendication 2 comprenant en outre entre les étapes b) et c) une étape d'hydrolyse du COS résiduel.

4. Procédé selon la revendication 3 comprenant :
- une étape a) conjointe d'hydrolyse de COS et d'HCN et de captation des composés halogénés, opérée sur tout ou partie de la charge via l'utilisation dudit catalyseur à base de TiO₂,
- une étape b) de lavage par au moins un solvant, ledit solvant étant une solution contenant un composé seul ou en mélange choisi parmi l'eau, la soude, les amines, les alcools, les dialkyl-éther de polyéthylène glycol, ou les mélanges amines et sulfolane, visant à éliminer le NH₃ formé lors de l'étape a), ainsi que les éventuelles impuretés autres qu'azotées, halogénées et soufrées initialement contenues dans le gaz de synthèse et sur lesquelles l'étape a) n'aurait pas eu d'action,
- une étape d'hydrolyse du COS résiduel opérée soit selon le mode opératoire de l'étape a), soit selon le mode opératoire de l'étape c) lorsque le solide utilisé à l'étape c permet de réaliser également l'hydrolyse du COS,
- une étape c) de désulfuration sur une masse de captation ou un adsorbant.

5. Procédé selon la revendication 4 dans lequel l'hydrolyse du COS résiduel est opérée selon le mode opératoire de l'étape a).

6. Procédé selon la revendication 4 dans lequel l'hydrolyse du COS résiduel est opérée simultanément à l'étape c) avec un solide permettant de réaliser à la fois l'hydrolyse du COS et la désulfuration.

7. Procédé selon l'une des revendications 1 à 6, dans lequel le catalyseur mis en oeuvre à l'étape a) renferme:
- entre 60% et 95% en poids d'oxyde de titane,
- entre 3% et 25% en poids de sulfate d'alcalino-terreux,
- entre 0,1% et 20% en poids d'un composé dopant ou d'une combinaison de composés dopants choisis parmi des composés de fer, de vanadium, de cobalt, de nickel, de cuivre, de molybdène, de tungstène sous forme d'oxyde et/ou de sulfure.

8. Procédé selon l'une des revendications 1 à 7, dans lequel l'étape a) d'hydrolyse/captation est opérée à une pression comprise entre 0,5 et 10 MPa et à une température comprise entre 100 et 350°C.

9. Procédé selon l'une des revendications 1 à 8, dans lequel le solvant utilisé pour l'étape b) de lavage est une solution contenant de l'eau et de la soude, et ladite étape est opérée à une pression comprise entre 0,5 et 10 MPa et à une température comprise entre 30 et 250°C.

10. selon l'une des revendications 1 à 8, dans lequel le solvant utilisé pour l'étape b) de lavage est une amine, et ladite étape est opérée à une pression comprise entre 0,5 et 10 MPa et à une température comprise entre 30 et 250°C.

11. Procédé selon l'une des revendications 1 à 8, dans lequel le solvant utilisé pour l'étape b) est une solution contenant un alcool et ladite étape est opérée à une pression comprise entre 0,5 et 10 MPa et à une température comprise entre -80 et 200°C.

12. Procédé selon l'une des revendications 1 à 11, dans lequel l'étape c) de désulfuration est mise en oeuvre avec une masse de captation ou adsorbant contenant un composé de type métal, oxyde, zéolithe ou carbonate, et au moins un élément choisi dans le groupe formé par Ca, Mg, Mn, Fe, Ni, Cu, Zn, Ag, Sn, La, Ce, seuls ou en mélange.

13. Procédé selon la revendication 12, dans lequel ladite étape de désulfuration est mise en oeuvre avec une masse de captation contenant du ZnO à une teneur comprise entre 85% poids et 100 %poids.

14. Procédé selon l'une des revendications 12 ou 13, dans lequel l'étape c) de désulfuration est opérée à une pression comprise entre 0,5 et 10 MPa et à une température comprise entre 100 et 400°C.

15. Procédé selon l'une des revendications 1 à 14, dans lequel à l'issue de l'étape c), le gaz de synthèse purifié est admis dans une unité de synthèse Fi scher-Tropsch.

16. Procédé selon l'une des revendications 1 à 14, dans lequel à l'issue de l'étape c), le gaz de synthèse purifié est admis dans une unité de synthèse du méthanol.

## Claims

1. Process for removing sulphur-containing, nitrogen-containing and halogen-containing impurities contained in a synthesis gas, such as H₂S, COS, CS₂, HCN, NH₃, HF, HCl, HBr and HI, said process including:
a) a joint step for hydrolysing COS and HCN and for collecting the halogen-containing compounds using a TiO₂-based catalyst comprising between 30 % by weight and 99 % by weight of TiO₂ and between 1 % by weight and 30 % by weight of at least one sulphate of an alkaline earth metal selected from calcium, barium, strontium and magnesium,
b) a washing step using at least one solvent, said solvent being is a solution containing a compound alone or as a mixture selected from water, sodium hydroxide, amines, alcohols, polyethylene glycol dialkyl ethers, or mixtures of amines and sulpholane, seeks to remove the NH3 formed during step a), as well as any impurities other than nitrogen-containing, halogen-containing and sulphur-containing impurities which are initially contained in the synthesis gas and on which step a) would not have had an effect,
c) a step for desulphurisation on a collecting or adsorbing mass.

2. Process according to claim 1, wherein steps a), b) and c) are carried out successively in this order.

3. Process according to claim 2, further including between steps b) and c) a step for hydrolysing the residual COS.

4. Process according to claim 3, including:
- a joint step a) for hydrolysing COS and HCN and for collecting the halogen-containing compounds, implemented on all or part of the feedstock via the use of said TiO₂-based catalyst,
- a washing step b) using at least one solvent, said solvent being is a solution containing a compound alone or as a mixture selected from water, sodium hydroxide, amines, alcohols, polyethylene glycol dialkyl ethers, or mixtures of amines and sulpholane, seeks to remove the NH3 formed during step a), as well as any impurities other than nitrogen-containing, halogen-containing and sulphur-containing impurities which are initially contained in the synthesis gas and on which step a) would not have had an effect,
- a step for hydrolysing the residual COS implemented either in accordance with the mode of operation of step a) or in accordance with the mode of operation of step c) if the solid used in step c) also allows the hydrolysing of the COS to be carried out,
- a step c) for desulphurisation on a collecting mass or an adsorbent.

5. Process according to claim 4, wherein the hydrolysing of the residual COS is implemented in accordance with the mode of operation of step a).

6. Process according to claim 4, wherein the hydrolysing of the residual COS is implemented simultaneously with step c) using a solid allowing both the hydrolysing of the COS and the desulphurisation to be carried out.

7. Process according to one of claims 1 to 6, wherein the catalyst utilised in step a) contains:
- between 60 % and 95 % by weight of titanium oxide,
- between 3 % and 25 % by weight of alkaline earth sulphate,
- between 0.1 % and 20 % by weight of a doping compound or of a combination of doping compounds selected from compounds of iron, vanadium, cobalt, nickel, copper, molybdenum, tungsten in oxide and/or sulphide form.

8. Process according to one of claims 1 to 7, wherein hydrolysis/collecting step a) is implemented at a pressure of between 0.5 and 10 MPa and at a temperature of between 100 and 350 °C.

9. Process according to one of claims 1 to 8, wherein the solvent used for washing step b) is a solution containing water and sodium hydroxide, and said step is implemented at a pressure of between 0.5 and 10 MPa and at a temperature of between 30 and 250 °C.

10. Process according to one of claims 1 to 8, wherein the solvent used for washing step b) is an amine, and said step is implemented at a pressure of between 0.5 and 10 MPa and at a temperature of between 30 and 250 °C.

11. Process according to one of claims 1 to 8, wherein the solvent used for step b) is a solution containing an alcohol and said step is implemented at a pressure of between 0.5 and 10 MPa and at a temperature of between -80 and 200 °C.

12. Process according to one of claims 1 to 11, wherein said desulphurisation step c) is utilised with a collecting or adsorbing mass containing a metal, oxide, zeolite or carbonate-type compound and at least one element selected from the group formed by Ca, Mg, Mn, Fe, Ni, Cu, Zn, Ag, Sn, La, Ce, alone or as a mixture.

13. Process according to claim 12, wherein said desulphurisation step is utilised with a collecting mass containing ZnO at a content of between 85 % by weight and 100 % by weight.

14. Process according to one of claims 12 or 13, wherein said desulphurisation step c) is implemented at a pressure of between 0.5 and 10 MPa and at a temperature of between 100 and 400 °C.

15. Process according to one of claims 1 to 14, wherein at the end of step c), the purified synthesis gas is admitted into a Fischer-Tropsch synthesis unit.

16. Process according to one of claims 1 to 14, wherein at the end of step c), the purified synthesis gas is admitted into a methanol synthesis unit.

## Patentansprüche

1. Verfahren zur Entfernung schwefelhaltiger, stickstoffhaltiger und halogenierter Verunreinigungen, die in einem Synthesegas enthalten sind, wie etwa H₂S, COS, CS₂, HCN, NH₃, HF, HCl, HBr und Hl, wobei das Verfahren Folgendes umfasst:
a) einen gemeinsamen Schritt zur Hydrolyse von COS und HCN und zum Abfangen der halogenierten Verbindungen unter Verwendung eines Katalysators auf Grundlage von TiO₂, welcher zwischen 30 Gewichts-% und 99 Gewichts-% an TiO₂ und zwischen 1 Gewichts-% und 30 Gewichts-% mindestens eines Sulfats eines Erdalkalimetalls umfasst, das aus Calcium, Barium, Strontium und Magnesium ausgewählt ist.
b) einen Schritt des Waschens mit mindestens einem Lösemittel, wobei das Lösemittel eine Lösung ist, die eine Verbindung allein oder in Mischung enthält, wobei diese aus Wasser, einer alkalisch reagierenden Natriumverbindung, Aminen, Alkoholen, Dialkylethern von Polyethylenglykol oder Amin- und Sulfolanmischungen ausgewählt ist, um das NH₃, das in Schritt a) gebildet wurde, sowie gegebenenfalls andere Verunreinigungen als die stickstoffhaltigen, halogenierten und schwefelhaltigen, zu beseitigen, sofern diese ursprünglich im Synthesegas enthalten waren und der Schritt a) keine Wirkung auf sie hatte,
c) einen Schritt der Schwefelabscheidung an einer Abfangmasse oder einem Adsorptionsmittel.

2. Verfahren nach Anspruch 1, wobei die Schritte a), b) und c) nacheinander in dieser Reihenfolge durchgeführt werden.

3. Verfahren nach Anspruch 2, das darüber hinaus zwischen den Schritten b) und c) einen Schritt der Hydrolyse des verbleibenden COS umfasst.

4. Verfahren nach Anspruch 3, umfassend
- einen gemeinsamen Schritt a) zur Hydrolyse von COS und HCN und zum Abfangen der halogenierten Verbindungen, welchem die Charge vollständig oder teilweise unterzogen wird, indem der Katalysator auf Grundlage von TiO₂ zur Anwendung kommt,
- einen Schritt b) des Waschens mit mindestens einem Lösemittel, wobei das Lösemittel eine Lösung ist, die eine Verbindung allein oder in Mischung enthält, wobei diese aus Wasser, einer alkalisch reagierenden Natriumverbindung, Aminen, Alkoholen, Dialkylethern von Polyethylenglykol oder Amin- und Sulfolanmischungen ausgewählt ist, um das NH₃, das in Schritt a) gebildet wurde, sowie gegebenenfalls andere Verunreinigungen als die stickstoffhaltigen, halogenierten und schwefelhaltigen, zu beseitigen, sofern diese ursprünglich im Synthesegas enthalten waren und der Schritt a) keine Wirkung auf sie hatte,
- einen Schritt der Hydrolyse des verbleibenden COS, der entweder gemäß der Vorgehensweise des Schrittes a) oder gemäß der Vorgehensweise des Schrittes c) durchgeführt wird, wenn es der in Schritt c verwendete Feststoff ermöglicht, auch die COS-Hydrolyse durchzuführen,
- einen Schritt c) der Schwefelabscheidung an einer Abfangmasse oder einem Adsorptionsmittel.

5. Verfahren nach Anspruch 4, wobei die Hydrolyse des verbleibenden COS gemäß der Vorgehensweise des Schrittes a) durchgeführt wird.

6. Verfahren nach Anspruch 4, wobei die Hydrolyse des verbleibenden COS zur gleichen Zeit wie Schritt c) durchgeführt wird, mit einem Feststoff, der es ermöglicht, sowohl die Hydrolyse des COS als auch die Schwefelabscheidung durchzuführen.

7. Verfahren nach einem der Ansprüche 1 bis 6, wobei der Katalysator, der in Schritt a) eingesetzt wird, Folgendes enthält
- zwischen 60 und 95 Gewichts-% an Titanoxid,
- zwischen 3 und 25 Gewichts-% an Erdalkalisulfat,
- zwischen 0,1 und 20 Gewichts-% einer Dotierverbindung oder einer Kombination von Dotierverbindungen, die aus den Verbindungen von Eisen, Vanadium, Kobalt, Nickel, Kupfer, Molybdän, Wolfram in Form von Oxid und/oder Sulfid ausgewählt sind.

8. Verfahren nach einem der Ansprüche 1 bis 7, wobei der Hydrolyse/Abfangschritt a) bei einem Druck im Bereich von 0,5 bis 10 MPa und bei einer Temperatur im Bereich von 100 und 350 °C durchgeführt wird.

9. Verfahren nach einem der Ansprüche 1 bis 8, wobei es sich bei dem Lösemittel, welches für den Waschschritt b) verwendet wird, um eine Lösung handelt, die Wasser und eine alkalisch reagierende Natriumverbindung enthält, und der Schritt bei einem Druck im Bereich von 0,5 bis 10 MPa und bei einer Temperatur im Bereich von 30 bis 250 °C durchgeführt wird.

10. Verfahren nach einem der Ansprüche 1 bis 8, wobei es sich bei dem Lösemittel, welches für den Waschschritt b) verwendet wird, um ein Amin handelt und der Schritt bei einem Druck im Bereich von 0,5 bis 10 MPa und bei einer Temperatur im Bereich von 30 bis 250 °C durchgeführt wird.

11. Verfahren nach einem der Ansprüche 1 bis 8, wobei es sich bei dem Lösemittel, welches für den Schritt b) verwendet wird, um eine Lösung handelt, die einen Alkohol enthält, und der Schritt bei einem Druck im Bereich von 0,5 bis 10 MPa und bei einer Temperatur im Bereich von -80 bis 200 °C durchgeführt wird.

12. Verfahren nach einem der Ansprüche 1 bis 11, wobei der Schwefelabscheidungsschritt c) mit einer Abfangmasse oder einem Adsorptionsmittel durchgeführt wird, die/das eine Verbindung vom Typ Metall, Oxid, Zeolith oder Carbonat und mindestens ein Element, welches aus der Gruppe ausgewählt ist, die von Ca, Mg, Mn, Fe, Ni, Cu, Zn, Ag, Sn, La, Ce gebildet wird, allein oder in Mischung enthält.

13. Verfahren nach Anspruch 12, wobei der Schwefelabscheidungsschritt mit einer Abfangmasse durchgeführt wird, deren ZnO-Gehalt im Bereich von 85 bis 100 Gewichts-% liegt.

14. Verfahren nach einem der Ansprüche 12 bis 13, wobei der Schwefelabscheidungsschritt c) bei einem Druck im Bereich von 0,5 bis 10 MPa und bei einer Temperatur im Bereich von 100 bis 400 °C durchgeführt wird.

15. Verfahren nach einem der Ansprüche 1 bis 14, wobei das aufgereinigte Synthesegas nach Abschluss des Schrittes c) in eine Fischer-Tropsch-Syntheseeinheit eingeleitet wird.

16. Verfahren nach einem der Ansprüche 1 bis 14, wobei das aufgereinigte Synthesegas nach Abschluss des Schrittes c) in eine Methanol-Syntheseeinheit eingeleitet wird.
